(19) **Europäisches Patentamt / European Patent Office / Office européen des brevets**

(11) **EP 4 625 277 A1**

(12) # EUROPEAN PATENT APPLICATION

(43) Date of publication:
01.10.2025 Bulletin 2025/40

(21) Application number: 24169418.1

(22) Date of filing: 10.04.2024

(51) International Patent Classification (IPC):
$G06Q\ 10/04^{(2023.01)}$      $G06Q\ 50/00^{(2024.01)}$
$G06Q\ 50/06^{(2024.01)}$

(52) Cooperative Patent Classification (CPC):
G06Q 50/06; G06Q 10/04; G06Q 50/00

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.03.2024 CN 202410374622

(71) Applicant: Hitachi Energy Ltd
8050 Zürich (CH)

(72) Inventors:
• PAN, Jiuping
  Raleigh, North Carolina, 27606 (US)

• ZHANG, Weichi
  Beijing, 100015 (CN)
• JOHANSSON, Nicklas
  722 46 Västerås (SE)
• SVENSSON, Jan
  723 46 Västerås (SE)
• YUAN, ChunMing
  Beijing, 100062 (CN)
• JAYAN, Vijesh
  723 59 Västerås (SE)

(74) Representative: Vossius & Partner
Patentanwälte Rechtsanwälte mbB
Siebertstrasse 3
81675 München (DE)

(54) **METHOD FOR OPERATING AN ELECTROLYZER PLANT, ELECTROLYZER PLANT, MEDIUM AND COMPUTER PROGRAM PRODUCT**

(57)     The present disclosure relates to a method for operating a hybrid electrolyzer plant, an electrolyzer plant, a computer-readable storage medium and a computer program product. The method for operating an electrolyzer plant comprises acquiring an electricity price forecast in a pre-determined period, at least respective one ancillary service price forecast in the pre-determined period for at least one of the plurality of predefined ancillary services, and technical operational constraints of the electrolyzer; and determining a hydrogen production of the electrolyzer and an ancillary service offer in the pre-determined period, at least based on a hydrogen production cost in the pre-determined period, an ancillary service profit, and the technical operational constraints of the electrolyzer, wherein the ancillary service offer includes at least one ancillary service to be provided to the electrical grid.

Fig. 1

EP 4 625 277 A1

**Description**

**TECHNICAL FIELD**

The present disclosure relates to a hybrid electrolyzer plant, a method for operating a hybrid electrolyzer plant, a computer-readable storage medium and a computer program product.

**BACKGROUND**

As an environmentally friendly energy carrier, hydrogen can power a variety of applications, such as long-distance transportation (e.g., via heavy-load trucks, planes, ferries, etc.), steelmaking, and ammonia generation.

Currently, hydrogen is produced by splitting water into oxygen and hydrogen using electricity in an electrolyzer plant. The electrolyzers used to produce hydrogen in the electrolyzer plant can be further designed and operated as flexible demands that can quickly ramp up or ramp down the electricity consumptions to provide grid services such as frequency regulation and operating reserves. The provision of grid ancillary services (A/S) would yield additional revenues the electrolyzers would make besides the sale of hydrogen.

In general, provision of grid services could generate additional revenues to the electrolyzer plant. An electrolyzer that provides downward flexibility by absorbing excess power supply on the grid will produce hydrogen that can be sold for additional revenues. However, when providing upward flexibility by reducing power consumption, the electrolyzer will reduce hydrogen production which constitutes the opportunity cost for providing the grid service. Therefore, the choice to provide upward flexibility can create an opportunity cost for electrolyzers and its attractiveness will depend on the difference of the opportunity cost and the revenue from grid services. On the other hand, the choice to provide downward flexibility will increase the electricity cost for additional hydrogen production and its attractiveness will depend on the difference of the increased electricity cost and the revenue from grid services. Furthermore, the operational capability of electrolyzers for providing grid services is dependent on the operating modes (i.e., online, standby, and offline) and the load levels of the electrolyzers as well as the technical operational constraints.

Thus, there is the need for an optimization process and methods that can operate the grid-connected electrolyzers as flexible demand under the technical operational constraints of the electrolyzers, to achieve the least-cost hydrogen production while at the same time maximize the potential revenues from grid ancillary services.

The method described in this section is not necessarily a method that has been previously conceived or employed. It should not be assumed that any of the methods described in this section is considered to be the prior art just because they are included in this section, unless otherwise indicated expressly. Similarly, the problem mentioned in this section should not be considered to be universally recognized in any prior art, unless otherwise indicated expressly.

**SUMMARY**

The present disclosure provides a method for operating an electrolyzer plant, a electrolyzer plant, a computer-readable storage medium and a computer program product.

According to an aspect of the present disclosure, a method for operating an electrolyzer plant is provided, wherein electrolyzer plant is connected to an electrical grid and comprising an electrolyzer, and the electrolyzer is configured to produce hydrogen by using electricity from the electrical grid and can provide at least one ancillary service selected from a plurality of predefined ancillary services to the electrical grid by adjusting a hydrogen production. The method comprises: acquiring an electricity price forecast in a pre-determined period, at least respective one ancillary service price forecast in the pre-determined period for at least one of the plurality of predefined ancillary services, and technical operational constraints of the electrolyzer; and determining a hydrogen production of the electrolyzer and an ancillary service offer in the pre-determined period, at least based on a hydrogen production cost in the pre-determined period, an ancillary service profit, and the technical operational constraints of the electrolyzer, wherein the ancillary service offer includes at least one ancillary service to be provided to the electrical grid; and wherein the hydrogen production cost is determined at least based on the electricity price forecast, and the ancillary service profit is determined at least based on the at least one ancillary service in the ancillary service offer and corresponding ancillary service price forecast for the plurality of predefined ancillary services.

According to some embodiments, the method for operating an electrolyzer plant further comprises producing hydrogen by the electrolyzer according to the determined hydrogen production of the electrolyzer; and in response to the electrical grid accepting at least one ancillary service in the ancillary service offer, providing the at least one ancillary service to the electrical grid by adjusting the hydrogen production.

According to some embodiments, the technical operational constraints comprise at least one of minimum load, maximum load, ramp-up, ramp-down rate of the electrolyzer, and total production target of the pre-determined period.

According to some embodiments, the determining the hydrogen production of the electrolyzer and the ancillary service offer in the pre-determined period comprises: determining the hydrogen production of the electrolyzer, by minimizing the hydrogen production cost under the technical operational constraints of the electrolyzer; selecting at least one available ancillary service from the plurality of predefined ancillary services based on the determined hydrogen production of the electrolyzer and the technical operational constraints of the electrolyzer; and for each available ancillary service of the at least one available ancillary service, in response to an ancillary service profit of the available ancillary service being higher than a first threshold, incorporating the available ancillary service into the ancillary service offer, wherein the ancillary service profit of the available ancillary service is determined at least by the available ancillary service and an ancillary service price forecast of the at least one ancillary service price forecast corresponding to the available ancillary service, and wherein the first threshold is determined at least based on a cost incurred by adjusting the hydrogen production due to the provision of the available ancillary service.

According to some embodiments, the pre-determined period comprises at least one pre-determined time interval, and wherein determining the hydrogen production of the electrolyzer and the ancillary service offer in the pre-determined period further comprises: for each pre-determined time interval, performing an adjustment process comprising: if there is at least one unavailable ancillary service different from the at least one available ancillary service in the plurality of predefined ancillary services, determining a potential ancillary service profit for each of the at least one unavailable ancillary service based on corresponding ancillary service price forecast; in response to the respective one potential ancillary service profit of the at least one unavailable ancillary service being larger than a second threshold, identifying an adjustment for the hydrogen production of the electrolyzer to enable the provision of the unavailable ancillary service to the electrical grid under the technical operational constraints of the electrolyzer, wherein the second threshold is determined at least based on a cost incurred by adjusting the hydrogen production due to the provision of the unavailable ancillary service; and in response to the respective one potential ancillary service profit for the at least one unavailable ancillary service being larger than a third threshold, adjusting the hydrogen production of the electrolyzer based on the identified adjustment and incorporating the unavailable ancillary service into the ancillary service offer, wherein the third threshold is determined at least based on a cost incurred by adjusting the hydrogen production of the electrolyzer based on the identified adjustment during the pre-determined period.

According to some embodiments, the identifying an adjustment for the hydrogen production of the electrolyzer to enable the provision of the unavailable ancillary service to the electrical grid under the technical operational constraints of the electrolyzer comprises identifying the adjustment for the hydrogen production of the electrolyzer under the technical operational constraints of the electrolyzer for the current interval and the subsequent intervals of the pre-determined period.

According to some embodiments, the adjustment is identified as a minimized adjustment for the hydrogen production of the electrolyzer to just enable the provision of the unavailable ancillary service to the electrical grid under the technical operational constraints of the electrolyzer.

According to some embodiments, the technical operational constraints comprise the ramp-up and the ramp-down rate of the electrolyzer, and wherein the adjustment is identified as a maximum change rate of the hydrogen production between the current interval and the next interval under the ramp-up and the ramp-down rate of the electrolyzer and an adjusting duration required by the ancillary service to be provided.

According to some embodiments, determining the hydrogen production of the electrolyzer and the ancillary service offer in the pre-determined period further comprises: for each pre-determined time interval, if no adjustment is identified for the current pre-determined time interval, the adjustment process proceeds to the next pre-determined time interval without any adjustment of the hydrogen production of the electrolyzer and the ancillary service offer; and if adjustment is identified for the current pre-determined time interval, the adjustment process proceeds to the next pre-determined time interval with adjusted hydrogen production of the electrolyzer and the ancillary service offer.

According to some embodiments, performing the adjustment process further comprises: identifying all profitable pre-determined time interval from the plurality of pre-determined time intervals, wherein the profitable pre-determined time interval has a potential ancillary service profit for the at least one unavailable ancillary service being larger than a second threshold from a plurality of pre-determined time intervals; and initiating the adjustment process starting from the pre-determined time interval with the highest potential ancillary service profit.

According to some embodiments, wherein determining the hydrogen production of the electrolyzer and the ancillary service offer in the pre-determined period comprises: determining the hydrogen production of the electrolyzer and the ancillary service offer, by minimizing the hydrogen production cost and meanwhile maximizing the ancillary service profit under the technical operational constraints of the electrolyzer.

According to some embodiments, further comprising: acquiring at least respective one real-time ancillary service price forecast in the pre-determined period for at least one real-time predefined ancillary services, grid operating conditions from the electrical grid, and the technical operational constraints of the electrolyzer; and determining a real-time hydrogen production of the electrolyzer and a real-time ancillary service offer which includes at least one ancillary service to be provided to the electrical grid, at least based on the real-time ancillary service price forecast from the electrical grid, and the grid operating conditions, and the technical operational constraints of the electrolyzer.

According to another aspect of the present disclosure, an electrolyzer plant connected to an electrical grid is provided, wherein the electrolyzer plant comprises: at least one electrolyzer; and a plant controller configured to perform the method for operating the electrolyzer plant in the present disclosure.

According to yet another aspect of the present disclosure, a computer-readable storage medium is provided, wherein the computer-readable storage medium has computer-readable instructions stored thereon, and when the computer-readable instructions are executed by a processor, the processor performs any of claims described in the present disclosure.

According to yet another aspect of the present disclosure, a computer program product is provided, which, when executed by a computer, cause the computer to perform any of claims described in the present disclosure.

It should be understood that the content described in this section is not intended to identify critical or important features of the embodiments of the present disclosure, and is not used to limit the scope of the present disclosure either. Other features of the present disclosure will be easily understood through the following specification.

**BRIEF DESCRIPTION OF THE DRAWINGS**

The drawings exemplarily show embodiments and form a part of the specification, and are used to illustrate example implementations of the embodiments together with a written description of the specification. The embodiments shown are merely for illustrative purposes and do not limit the scope of the claims. Throughout the drawings, like reference signs denote like but not necessarily identical elements.

Fig. 1 is a schematic diagram illustrating an electrolyzer plant connected to an electrical grid according to some embodiments of the present disclosure.
Fig. 2 is a flow chart illustrating the method for operating an electrolyzer plant according to some embodiments of the present disclosure.
Fig. 3 is a flow chart illustrating the steps of producing hydrogen by the electrolyzer according to some embodiments of the present disclosure.
Fig. 4 is a flow chart illustrating the steps of the determining the hydrogen production of the electrolyzer and the ancillary service offer according to some embodiments of the present disclosure.
Fig. 5 is a flow chart illustrating an adjustment process according to some embodiments of the present disclosure.
Fig. 6 shows an illustrative example of the determining the hydrogen production of the electrolyzer and the ancillary service offer by the method for operating an electrolyzer plant according to some embodiments of the present disclosure.
Fig. 7 shows an illustrative example of performing the adjustment process according to some embodiments of the present disclosure.
Fig. 8 is a flow chart illustrating the method for operating an electrolyzer plant according to other embodiments of the present disclosure.
Fig. 9 is a schematic diagram illustrating a computing device that can be used in accordance with the methods disclosed herein.

**DETAILED DESCRIPTION OF THE EMBODIMENTS**

The present disclosure will be further described in detail below with reference to the drawings and embodiments. It can be understood that embodiments described herein are used merely to explain a related disclosure, rather than limit the disclosure. It should be additionally noted that, for ease of description, only parts related to the related disclosure are shown in the drawings.

It should be noted that the embodiments in the present disclosure and features in the embodiments can be combined with each other without conflict. If the number of elements is not specifically defined, there may be one or more elements, unless otherwise expressly indicated in the context. In addition, numbers of steps or functional modules used in the present disclosure are used merely to identify the steps or functional modules, rather than limit either a sequence of performing the steps or a connection relationship between the functional modules. As used herein, the term "and/or" includes any and all combinations of one or more of the associated listed items. The term "based on" is to be construed as "based at least in part on".

Currently, providing a grid ancillary service to a connected electrical grid could generate additional revenue to the electrolyzer plant. However, to provide a grid ancillary service, at least one electrolyzer in the electrolyzer plant must be operated to save power consumption by reducing hydrogen production, which constitutes the opportunity cost for providing the grid ancillary service. Furthermore, the operational capability of the electrolyzer for providing the grid ancillary service is dependent on at least the technical operational constraints of the electrolyzer. There is not yet an optimization method in the related prior art that can operate the electrolyzer as flexible demand of hydrogen production under the technical operational constraints of the electrolyzer to minimize the cost of hydrogen production while at the same time maximize the potential revenue from the grid ancillary service.

To solve the above problem, the present disclose provides a method for operating an electrolyzer plant.

Embodiments of the present disclosure will be described in detail below in conjunction with the accompanying drawings.

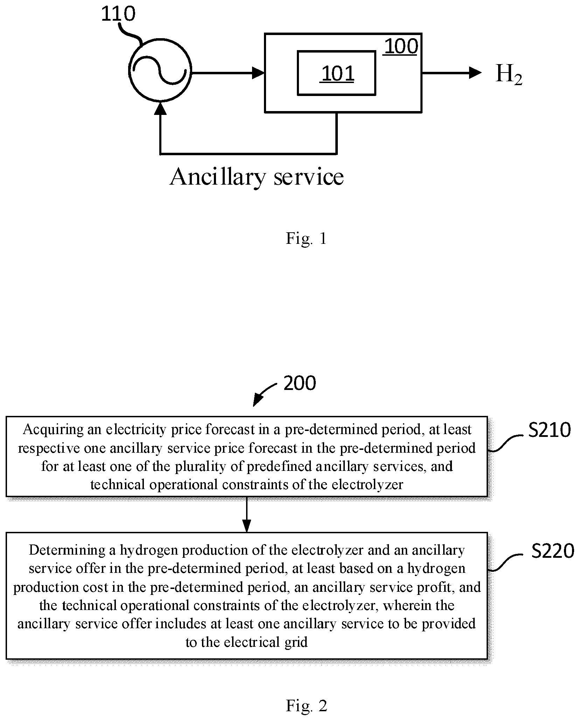

Fig. 1 is a schematic diagram illustrating an electrolyzer plant 100 according to some embodiments of the present disclosure.

As shown in Fig. 1, the electrolyzer plant 100 comprises an electrolyzer 101, which is configured to use electricity to split water into hydrogen and oxygen. It should be understood that, Fig. 1 shows only one electrolyzer 101 for illustrative purposes, and the electrolyzer plant 100 can also include a plurality of electrolyzers 101.

Fig. 1 further illustrates an electrical grid 110, to which the electrolyzer plant 100 is connected. The electrolyzer 101 in the electrolyzer plant 100 is configured to produce hydrogen by using electricity from the electrical grid. On the other hand, the electrolyzer 101 can provide at least one ancillary service selected from a plurality of predefined ancillary services to the electrical grid by adjusting a hydrogen production. In some embodiments, to provide a grid ancillary service, the electrolyzer in the electrolyzer plant can be operated to save power consumption by reducing hydrogen production.

According to some embodiments, the "ancillary service" refers to a service which is necessary for reliable and efficient operation of the electrical grid and organized in different categories by the system operator of the electrical grid in different country or region. The "predefined ancillary service" refers to the ancillary service predefined by the system operator of the electrical grid according to its particular requirement. In general, there are a plurality of predefined ancillary services predefined by the system operator of the electrical grid. The electrolyzer can provide at least one ancillary service selected from the plurality of predefined ancillary services to the electrical grid by adjusting a hydrogen production. The plurality of predefined ancillary services may comprise frequency ancillary services. For a European electrical grid, frequency ancillary services include Frequency Containment Reserves (FCR), Frequency Restoration Reserves (FRRs) and Reserve Restoration (RR). For an electrical grid of United States, the frequency ancillary services are typically categorized into frequency regulation and operating reserves.

Fig. 2 is a flow chart illustrating the method 200 for operating an electrolyzer plant according to some embodiments of the present disclosure. For illustrative purposes, the method 200 as described below is implemented by the electrolyzer plant 100 and the electrical grid 110 shown in Fig. 1.

As shown in Fig. 2, the method 200 comprises the following steps:

S210: acquiring an electricity price forecast in a pre-determined period, at least respective one ancillary service price forecast in the pre-determined period for at least one of the plurality of predefined ancillary services, and technical operational constraints of the electrolyzer; and

S220: determining a hydrogen production of the electrolyzer and an ancillary service offer in the pre-determined period, at least based on a hydrogen production cost in the pre-determined period, an ancillary service profit, and the technical operational constraints of the electrolyzer, wherein the ancillary service offer includes at least one ancillary service to be provided to the electrical grid.

According to some embodiments, the "pre-determined period" refers to any future period, for which the hydrogen production of the electrolyzer and the ancillary service offer need to be planed. The ancillary service offer includes at least one ancillary service which is planned to be provided to the electrical grid. For example, in some energy markets, the electrolyzer plant needs to determine the hydrogen production of the electrolyzer and the ancillary service offer for the next day (24 hours).

According to some embodiments, the hydrogen production cost is determined at least based on the electricity price forecast. The ancillary service profit is determined at least based on the at least one ancillary service in the ancillary service offer and corresponding ancillary service price forecast for the plurality of predefined ancillary services.

According to some embodiments, the system operator of the electrical grid may issue the ancillary service need for the pre-determined period. According to other embodiments, market intelligence and data analytics can help make reliable and accurate the electricity price forecasts and ancillary service price forecasts.

In the step S220, when determining the hydrogen production of the electrolyzer and an ancillary service offer in the pre-determined period, the technical operational constraints of the electrolyzer are also be considered.

According to some embodiments, the technical operational constraints of the electrolyzer comprise at least one of minimum load, maximum load, ramp-up, ramp-down rate of the electrolyzer, and total production target of the pre-determined period.

The minimum load and the maximum load of the electrolyzer are determined by the required minimum hydrogen production and the maximum hydrogen production of the electrolyzer respectively. The hydrogen production of the electrolyzer can be adjusted within the range between the minimum load and the maximum load of the electrolyzer.

The ramp-up and ramp-down rate of the electrolyzer refer to a rate of increasing hydrogen production and a rate of decreasing hydrogen production respectively. The change of the hydrogen production of the electrolyzer, e.g., from one hour to the next must be technically feasible considering the allowed ramp-up or ramp-down rates of the electrolyzer and the ramping duration specified by the system operator of the electrical grid to meet grid operational requirements and meantime avoid equipment loss or damage of the electrolyzer.

The total production target is determined by contracted production requirements. For example, for an industrial process with integrated hydrogen production facilities, the flexibility of the hydrogen production of the electrolyzer may be limited by specific production requirements and availability of hydrogen storage. For example, a steelmaking process may require a continuous flow of hydrogen and specific amount of hydrogen.

Turning to Fig. 2, according to some embodiments, when the hydrogen production of the electrolyzer and the ancillary service offer in the pre-determined period are determined, the electrolyzer plant needs to submit the hydrogen production and the ancillary service offer to the system operator of the electrical grid. Note that the submitted the hydrogen production and the ancillary service offer may be only partially accepted by the system operator of the electrical grid due to market competitions. The confirmed the hydrogen production and the ancillary service offer will be used by the electrolyzer plant as the baseline of the next-day operations.

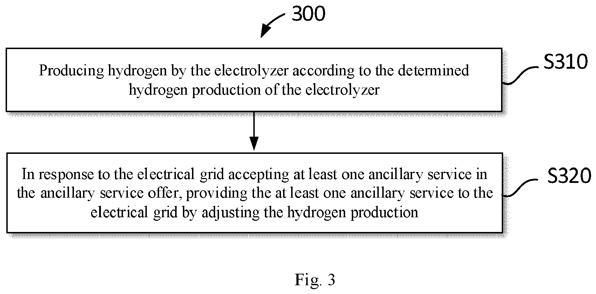

Therefore, as show in Fig. 3, the method 200 for operating an electrolyzer plant according to some embodiments of the present disclosure further comprises the following steps:

S310: producing hydrogen by the electrolyzer according to the determined hydrogen production of the electrolyzer; and
S320: in response to the electrical grid accepting at least one ancillary service in the ancillary service offer, providing the at least one ancillary service to the electrical grid by adjusting the hydrogen production.

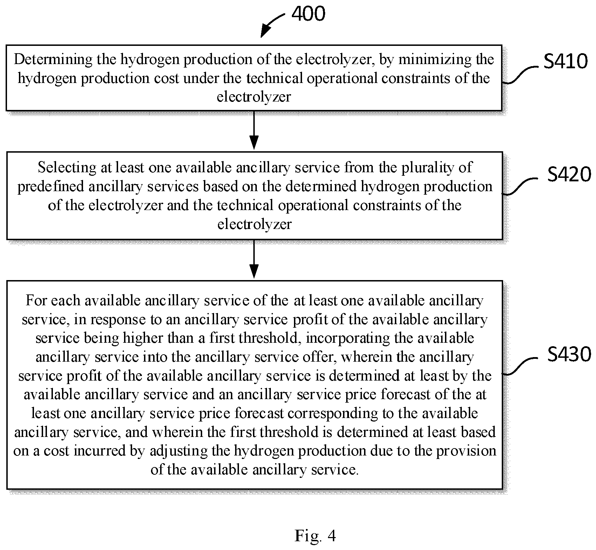

Turning to Fig. 4, according to some embodiments, the determining (S220) the hydrogen production of the electrolyzer and the ancillary service offer in the pre-determined period comprises:

S410: determining the hydrogen production of the electrolyzer, by minimizing the hydrogen production cost under the technical operational constraints of the electrolyzer;
S420: selecting at least one available ancillary service from the plurality of predefined ancillary services based on the determined hydrogen production of the electrolyzer and the technical operational constraints of the electrolyzer; and
S430: for each available ancillary service of the at least one available ancillary service, in response to an ancillary service profit of the available ancillary service being higher than a first threshold, incorporating the available ancillary service into the ancillary service offer, wherein the ancillary service profit of the available ancillary service is determined at least by the available ancillary service and an ancillary service price forecast of the at least one ancillary service price forecast corresponding to the available ancillary service, and wherein the first threshold is determined at least based on a cost incurred by adjusting the hydrogen production due to the provision of the available ancillary service.

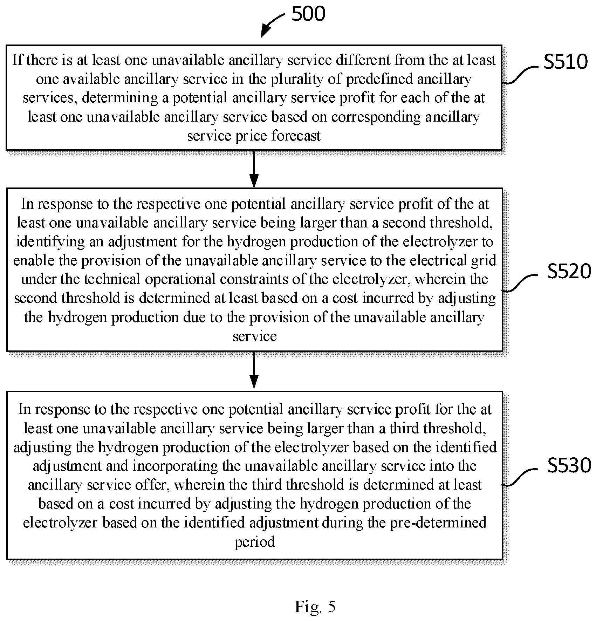

By performing the above steps S410-S430, the hydrogen production of the electrolyzer and the ancillary service offer are preliminarily determined. Based on the preliminarily determined results, the hydrogen production of the electrolyzer and the ancillary service offer can be further adjusted by dividing the pre-determined period into at least one pre-determined time interval and for each pre-determined time interval, performing an adjustment process comprising the following step as shown in Fig. 5:

S510: if there is at least one unavailable ancillary service different from the at least one available ancillary service in the plurality of predefined ancillary services, determining a potential ancillary service profit for each of the at least one unavailable ancillary service based on corresponding ancillary service price forecast;
S520: in response to the respective one potential ancillary service profit of the at least one unavailable ancillary service being larger than a second threshold, identifying an adjustment for the hydrogen production of the electrolyzer to enable the provision of the unavailable ancillary service to the electrical grid under the technical operational constraints of the electrolyzer, wherein the second threshold is determined at least based on a cost incurred by adjusting the hydrogen production due to the provision of the unavailable ancillary service; and
S530: in response to the respective one potential ancillary service profit for the at least one unavailable ancillary service being larger than a third threshold, adjusting the hydrogen production of the electrolyzer based on the identified adjustment and incorporating the unavailable ancillary service into the ancillary service offer, wherein the third threshold is determined at least based on a cost incurred by adjusting the hydrogen production of the electrolyzer based on the identified adjustment during the pre-determined period.

According to some embodiments, in step 520, the identifying an adjustment for the hydrogen production of the electrolyzer to enable the provision of the unavailable ancillary service to the electrical grid under the technical operational constraints of the electrolyzer comprises: identifying the adjustment for the hydrogen production of the electrolyzer under the technical operational constraints of the electrolyzer for the current interval and the subsequent intervals of the pre-determined period. Considering the subsequent intervals of the pre-determined period ensures that no adjustment of the hydrogen production of the electrolyzer would exceed the technical operational constraints of the electrolyzer.

It should be understood that there would be several adjustments which meet the technical operational constraints of the electrolyzer for the current interval and the subsequent intervals of the pre-determined period. According to some embodiments, the adjustment is identified as a minimized adjustment for the hydrogen production of the electrolyzer to just enable the provision of the unavailable ancillary service to the electrical grid under the technical operational constraints of the electrolyzer. This can minimize the burden on the electrolyzer plant. In a case that the technical operational constraints comprise the ramp-up and the ramp-down rate of the electrolyzer, the adjustment is identified as a maximum change rate of the hydrogen production between the current interval and the next interval under the ramp-up and the ramp-down rate of the electrolyzer and an adjusting duration required by the ancillary service to be provided.

According to some embodiments, in step 520, for each pre-determined time interval, the adjustment process further comprises the following steps:

- if no adjustment is identified for the current pre-determined time interval, the adjustment process proceeds to the next pre-determined time interval without any adjustment of the hydrogen production of the electrolyzer and the ancillary service offer; and

- if adjustment is identified for the current pre-determined time interval, the adjustment process proceeds to the next pre-determined time interval with adjusted hydrogen production of the electrolyzer and the ancillary service offer.

It should be understood that the adjustment process can be started from any pre-determined time interval. According to some embodiments, all profitable pre-determined time intervals from the plurality of pre-determined time intervals are determined firstly. The profitable pre-determined time interval has a potential ancillary service profit for the at least one unavailable ancillary service being larger than a second threshold from a plurality of pre-determined time intervals. Then, the adjustment process is initiated by starting from the pre-determined time interval with the highest potential ancillary service profit. This may increase efficiency of the adjustment process.

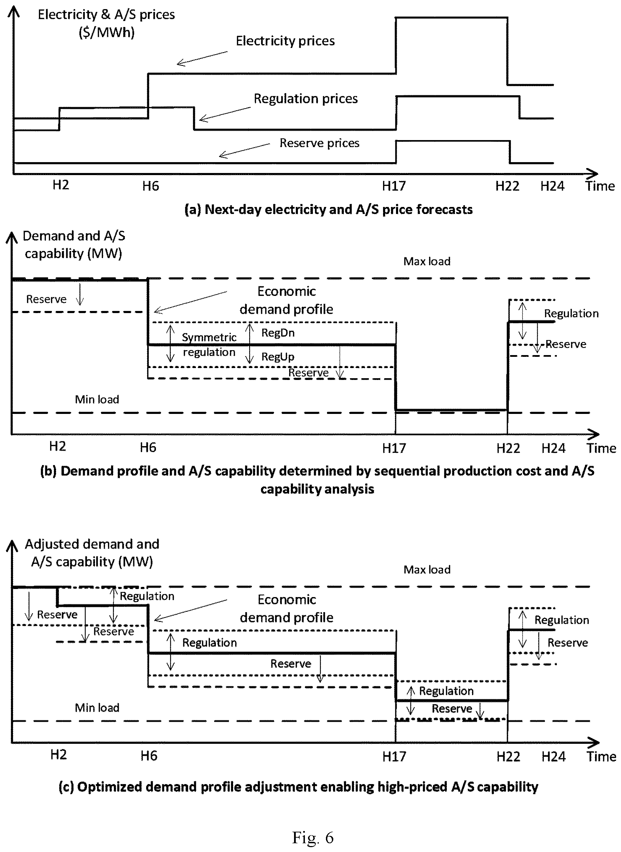

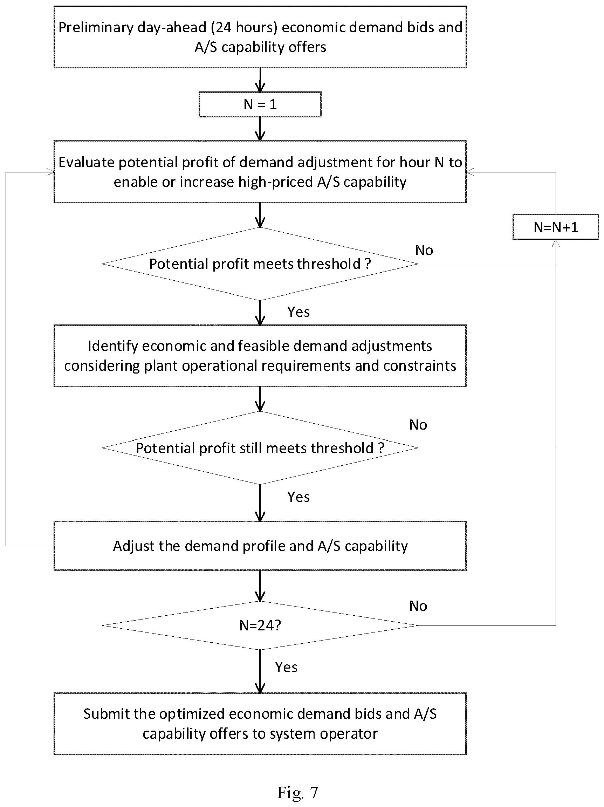

An embodiment of the above method is described below in conjunction with Fig. 6 and Fig. 7. For illustrative purposes, the hydrogen production of the electrolyzer and the ancillary service offer are determined for the next day (24 hours). The next day (24 hours) is divided into 24 time intervals of 1 hour to preform the adjustment process.

Fig. 6 shows illustrative examples of the determined next-day demand profile and A/S capability by the introduced optimization process and methods. Fig. 6 (a) shows the next-day electricity and grid A/S price forecasts. In US energy markets, the A/S markets are cleared using energy prices (i.e., \$/MWh) even though these prices are capacity payment for keeping the capacity available. In ENTSO-E, the A/S markets are cleared using capacity payment (i.e., €/MW). In either US energy markets and ENTSO-E, there is possible utilization payment if the service is activated. In the shown example, the market prices of frequency regulation services are higher than the prices of operating reserves which are typical, and the prices of frequency regulation in H3 through H6 are even higher than the electricity prices which may be possible in volatile energy and A/S markets.

Fig. 6 (b) shows the next-day demand profile and A/S capability determined using the sequential optimization procedure as shown in Fig. 4. The production optimization procedure determines the least-cost hydrogen production subject to production target and maximum and minimum load constraints of electrolyzers. The resulting economic demand profile comprises four dispatch levels: full load during the H1 through H6, intermediate load during H7 through H17, minimum load during H18 through H22 and another intermediate load in H23 and H24. The next-day A/S capability is then determined for symmetric frequency regulation and operating reserves based on the hourly demand profile. During the period H1 through H6, only operating reserves can be provided since the electrolyzers operate at full load conditions. No symmetric frequency regulation and operating reserve capability are available during H18 through H22 when the electrolyzers operate at minimum load. During intermediate load levels, both symmetric frequency regulation services and operating reserves can be provided. The available operating reserves typically are higher than available regulation up capability because of longer activation time allowed for providing operating reserve compared to regulation services. The determined frequency regulation capability and operating reserve capability are marked with bidirectional arrows and unidirectional arrows, respectively. Color shaded A/S capabilities represent the recommended A/S capability offers that may generate potential revenues from A/S markets. Frequency regulation up service provided by the electrolyzer plant is reserved with feasible reduction from the scheduled demand and frequency regulation down service is reserved by feasible increase from the scheduled demand.

Fig. 6 (c) shows the adjusted next-day demand profile and A/S capability determined using the adjustment process as shown in Fig. 5. Fig. 7 further shows an illustrated embodiment of the detailed procedures.

The determined next-day demand and A/S profile may be improved through demand profile adjustments as shown in Fig. 7 if such adjustments can lead to increased profits from high-priced grid services. In the flowchart shown in Fig. 7, N represents for every hour of the day-ahead demand profile. Starting for the preliminary next-day demand profile and A/S capability, the optimization procedure evaluates the potential profit of adjusting the demand for the current hour N that may enable or increase the high-priced A/S capability. For example, operating the electrolyzers not at the full load or the standby mode can enable symmetric frequency regulation capability. Demand adjustments will be considered if the revenue from increased grid services is higher than the opportunity cost due to reduced hydrogen production or increased electricity cost due to additional hydrogen production and the potential profit is higher than a predetermined threshold. The optimization procedure further evaluates the demand adjustments for the current hour N with consideration of plant operational requirements and constraints. Additional demand adjustments might be initiated for other hours. If no economic and feasible demand adjustment is identified for the current hour N, the demand adjustment process will proceed to the next hour N+1 without any update of the next-day demand profile. If economic and feasible demand adjustments identified for the current hour N, the demand adjustment process will proceed to the next hour N+1 with updated next-day demand profile and A/S capability.

Turning back to Fig. 6, comparing with the demand profile and A/S capability offers determined in Fig. 6 (b), the dispatch level during H2 through H6 is reduced from the full load such that the electrolyzers can offer high-priced symmetric frequency regulation services. The electrolyzers will increase the hydrogen production during H18 through H22 expecting that the revenues from high-priced regulation services would exceed the cost of uneconomic production during these hours.

The optimal scheduling of the next-day demand profile and grid service capability is determined based on the potential benefits from hydrogen production and revenue of providing grid services subject to plant and system operational constraints. In particular, the scheduled load changes from one hour to the next must be technically feasible considering the allowed ramp rate of the electrolyzer plant and the ramping duration specified by the system operator to meet grid operational requirements and avoid equipment loss or damage. For example, the economic schedule determines demand reduction from H6 to H7 as shown in Fig. 6 (b) and provide symmetric regulation service plus operating reserve in H7. To assure immediate capability of symmetric regulation and operating reserve services in H7, the total of scheduled demand reduction from H6 to H7 plus reserved demand reduction for providing regulation-up and operating reserve services in H7 must be within the allowed ramp rate of the electrolyzer plant and the ramping duration specified by the system operator.

In addition to the hourly sequential demand adjustment process described in Fig. 7, the demand adjustment process may first identify the hours with potential profits from enabling or increasing high-priced A/S capability and then initiate demand profile adjustments starting from the hours with high potential profits.

According to other embodiments, the optimal scheduling of the electrolyzer demand and the grid service capability can be determined by a co-optimization process. That is, the hydrogen production of the electrolyzer and the ancillary service offer are determined by minimizing the hydrogen production cost and meanwhile maximizing the ancillary service profit under the technical operational constraints of the electrolyzer at the same time.

According to other embodiments, the co-optimization problem can be formulated by establishing an objective function that minimizes the total cost for achieving a hydrogen production target with inclusion of grid service offset (i.e., the revenues from provision of grid ancillary services) subject to a range of operational constraints. It is assumed that electrolyzer plant can provide both FCR service which requires symmetric frequency regulation capability and FRR services which are provided as separate capability for regulation up and regulation down.

$$min \sum_{t=1}^{24} \left[ c_t D_t - 0.5 p_t^{SymReg} \left( R_t^{SymRegUp} + R_t^{SymRegDn} \right) - p_t^{RegUp} R_t^{RegUp} - p_t^{RegDn} R_t^{RegDn} \right] \quad (1)$$

Subject to

$$D_{t\_min} \leq D_t \leq D_{t\_max} \quad (2)$$

$$\sum_{H=1}^{24} D_t = D_{target} \quad (3)$$

$$D_t + R_t^{SymRegDn} + R_t^{RegDn} \leq D_{rated} \quad (4)$$

$$D_t - R_t^{SymRegUp} - R_t^{RegUp} \geq D_{min} \qquad (5)$$

$$R_t^{SymRegUp} - R_t^{SymRegDn} = 0 \qquad (6)$$

$$D_{t+1} + R_{t+1}^{SymRegDn} + R_{t+1}^{RegDn} - D_t - R_t^{SymRegUp} - R_t^{SymRegUp} \leq RR \times RD \qquad (7)$$

$$D_t + R_t^{SymRegDn} + R_t^{RegDn} - D_{t+1} - R_{t+1}^{SymRegUp} - R_{t+1}^{SymRegUp} \leq RR \times RD \qquad (8)$$

where t represents the hour in next day operation; then for each hour t, $c_t$ is the unit cost of power purchased by the electrolyzer plant from the grid, $D_t$ is the scheduled demand for producing hydrogen, $p_t^{SymReg}$ is the unit price of symmetric regulation service paid by the grid, $R_t^{SymRegUp}$ and $R_t^{SymRegDn}$ are the reserved capability for symmetric frequency regulation service, $p_t^{RegUp}$ and $p_t^{RegDn}$ are the unit prices for unsymmetric regulation up and regulation down services, $R_t^{RegUp}$ and $R_t^{RegDn}$ are the reserved capability for unsymmetric regulation up and regulation down services, $D_{t\_min}$ and $D_{t\_max}$ define the demand flexibility for producing hydrogen for hour t, $D_{target}$ is the total power consumption needed for meeting the hydrogen production target, $D_{rated}$ is the rated demand of the electrolyzer plant which is the limit for the scheduled demand and the reserved frequency regulation down capacity (i.e., the headroom for increasing the demand during over frequency in the grid), $D_{min}$ is the minimum demand that the electrolyzer plant must maintain which is the limit for the scheduled demand and the reserved frequency regulation up capacity (i.e., the footroom for decreasing the demand during under frequency in the grid), RR is the allowed ramp rate of the electrolyzer plant and RD is the ramping duration specified by the system operator.

Equation (6) sets constraints on the provision of symmetric regulation capability. The constraints set by equations (7) and (8) are mutually exclusive to each other, i.e., only one equation is a binding constraint for every two successive hours. These two equations assure that the hour-to-hour changes in demand and grid service capability are within the allowed ramp rate of the electrolyzer plant and the ramping duration specified by the system operator.

In the co-optimization formulation described above, the startup and shutdown costs and plant operational efficiency characteristics are not considered. The above co-optimization formulation could be expended to include additional operational flexibility and constraints for the hydrogen electrolyzer plant with integrated energy storage systems or hydrogen storage facilities.

From grid operation perspective, the system operator receives the next-day demand profile and grid service capability offers submitted by the electrolyzer plant and determines the optimal system-level generation and demand schedule and grid service procurements from all received generation and demand offers. The electrolyzer plant will then be noticed by the system operator for the confirmed next-day demand profile and grid service capability. Large-scale electrolyzer plant, operated as flexible transmission-connected demand facilities, can provide lower-cost and reliable grid services than generation facilities and distributed resources. The cost for procuring regulation services from generation facilities are typically higher than that from flexible demand facilities. On the other hand, activating the grid services provided by large-scale electrolyzer plant is more reliable and more efficient comparing with activating distributed resources.

According to some embodiments, in some energy markets, the electrolyzer plant will have the opportunity, at the present dispatch interval, to update the demand and A/S capability in Real-Time Market (RTM) for the next dispatch interval based on short-term electricity and A/S price forecasts. Desired real-time dispatch adjustments will be sent to the system operator and the accepted adjustments will be executed by the electrolyzer plant controller during the next dispatch internal.

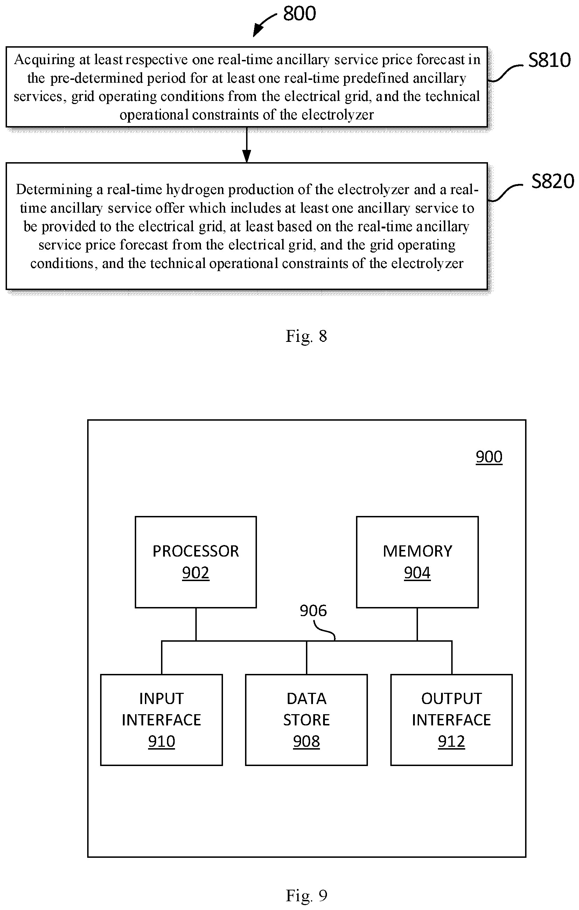

In this case, the method 200 for operating an electrolyzer plant according to some embodiments of the present disclosure can further the following steps as shown in Fig. 8:

S810: acquiring at least respective one real-time ancillary service price forecast in the pre-determined period for at least one real-time predefined ancillary services, grid operating conditions from the electrical grid, and the technical operational constraints of the electrolyzer; and

S820: determining a real-time hydrogen production of the electrolyzer and a real-time ancillary service offer which includes at least one ancillary service to be provided to the electrical grid, at least based on the real-time ancillary service price forecast, and the grid operating conditions, and the technical operational constraints of the electrolyzer.

It should be understood that all steps as described above can be performed when determining a real-time hydrogen production of the electrolyzer and a real-time ancillary service offer.

According to some embodiments, an electrolyzer plant connected to an electrical grid is provided. The electrolyzer plant comprises: at least on electrolyzer; and a plant controller configured to perform the method for operating the electrolyzer plant in the present disclosure.

According to some embodiments, a computer-readable storage medium is provided, which has computer-readable instructions stored thereon, and when the computer-readable instructions are executed by a processor, the processor performs the method for operating the electrolyzer plant in the present disclosure.

According to some embodiments, a computer program product is provided, which comprises instructions which, when executed by a computer, cause the computer to perform the method for operating the electrolyzer plant in the present disclosure.

Referring now to FIG. 9, a high-level illustration of an exemplary computing device 900 that can be used in accordance with the methods disclosed herein is illustrated. The computing device 900 includes at least one processor 902 that executes instructions that are stored in a memory 904. The instructions may be, for instance, instructions for implementing functionality described as being carried out by one or more components discussed above or instructions for implementing one or more of the methods described above. The processor 902 may access the memory 904 by way of a system bus 906.

The computing device 900 additionally includes a data store 908 that is accessible by the processor 902 by way of the system bus 906. The data store 908 may include executable instructions, log data, etc. The computing device 900 also includes an input interface 910 that allows external devices to communicate with the computing device 900. For instance, the input interface 910 may be used to receive instructions from an external computer device, from a user, etc. The computing device 900 also includes an output interface 912 that interfaces the computing device 900 with one or more external devices. For example, the computing device 900 may display text, images, etc. by way of the output interface 912.

It is contemplated that the external devices that communicate with the computing device 900 via the input interface 910 and the output interface 912 can be included in an environment that provides substantially any type of user interface with which a user can interact. Examples of user interface types include graphical user interfaces, natural user interfaces, and so forth. For instance, a graphical user interface may accept input from a user employing input device(s) such as a keyboard, mouse, remote control, or the like and provide output on an output device such as a display. Further, a natural user interface may enable a user to interact with the computing device 900 in a manner free from constraints imposed by input device such as keyboards, mice, remote controls, and the like. Rather, a natural user interface can rely on speech recognition, touch and stylus recognition, gesture recognition both on screen and adjacent to the screen, air gestures, head and eye tracking, voice and speech, vision, touch, gestures, machine intelligence, and so forth.

Additionally, while illustrated as a single system, it is to be understood that the computing device 900 may be a distributed system. Thus, for instance, several devices may be in communication by way of a network connection and may collectively perform tasks described as being performed by the computing device 900.

Various functions described herein can be implemented in hardware, software, or any combination thereof. If implemented in software, the functions can be stored on or transmitted over as one or more instructions or code on a computer-readable medium. Computer-readable media includes computer-readable storage media. A computer-readable storage media can be any available storage media that can be accessed by a computer. By way of example, and not limitation, such computer-readable storage media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fibre optic cable, twisted pair, digital subscriber line (DSL), or wireless technologies such as infrared, radio, and microwave, then the coaxial cable, fibre optic cable, twisted pair, DSL, or wireless technologies such as infrared, radio and microwave are included in the definition of communication medium. Combinations of the above should also be included within the scope of computer-readable media. It should be understood that the computer program product can be stored on the non-transitory computer-readable storage medium or can be downloaded through the communication medium.

The flowcharts and block diagrams in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes functions or operations, or may be implemented by a combination of dedicated hardware and computer instructions.

The foregoing descriptions are merely preferred embodiments of the present disclosure and explanations of the applied technical principles. Those skilled in the art should understand that the scope of the present disclosure involved in the embodiments of the present disclosure is not limited to the technical solutions formed by specific combinations of the foregoing technical features, and shall also cover other technical solutions formed by any combination of the foregoing technical features or equivalent features thereof without departing from the foregoing inventive concept. For example, a technical solution formed by a replacement of the foregoing features with technical features with similar functions in the technical features disclosed in the embodiments of the present disclosure (but not limited thereto) also falls within the scope of the present disclosure.

## Claims

1. A method for operating an electrolyzer plant being connected to an electrical grid and comprising an electrolyzer, the electrolyzer being configured to produce hydrogen by using electricity from the electrical grid and can provide at least one ancillary service selected from a plurality of predefined ancillary services to the electrical grid by adjusting a hydrogen production,

   the method comprising:

   - acquiring (S210) an electricity price forecast in a pre-determined period, at least respective one ancillary service price forecast in the pre-determined period for at least one of the plurality of predefined ancillary services, and technical operational constraints of the electrolyzer; and
   - determining (S220) a hydrogen production of the electrolyzer and an ancillary service offer in the pre-determined period, at least based on a hydrogen production cost in the pre-determined period, an ancillary service profit, and the technical operational constraints of the electrolyzer, wherein the ancillary service offer includes at least one ancillary service to be provided to the electrical grid; and

   wherein the hydrogen production cost is determined at least based on the electricity price forecast, and the ancillary service profit is determined at least based on the at least one ancillary service in the ancillary service offer and corresponding ancillary service price forecast for the plurality of predefined ancillary services.

2. The method of claim 1, further comprising:

   causing (S310) hydrogen to be produced by the electrolyzer according to the determined hydrogen production of the electrolyzer; and
   in response to the electrical grid accepting at least one ancillary service in the ancillary service offer, providing (S320) the at least one ancillary service to the electrical grid by adjusting the hydrogen production.

3. The method of claim 1, wherein the technical operational constraints comprise at least one of minimum load, maximum load, ramp-up, ramp-down rate of the electrolyzer, and total production target of the pre-determined period.

4. The method of any one of claims 1-3, wherein the determining (S220) the hydrogen production of the electrolyzer and the ancillary service offer in the pre-determined period comprises:

   - determining (S410) the hydrogen production of the electrolyzer, by minimizing the hydrogen production cost under the technical operational constraints of the electrolyzer;
   - selecting (S420) at least one available ancillary service from the plurality of predefined ancillary services based on the determined hydrogen production of the electrolyzer and the technical operational constraints of the electrolyzer; and

- for each available ancillary service of the at least one available ancillary service, in response to an ancillary service profit of the available ancillary service being higher than a first threshold, incorporating (S430) the available ancillary service into the ancillary service offer, wherein the ancillary service profit of the available ancillary service is determined at least by the available ancillary service and an ancillary service price forecast of the at least one ancillary service price forecast corresponding to the available ancillary service, and wherein the first threshold is determined at least based on a cost incurred by adjusting the hydrogen production due to the provision of the available ancillary service.

5. The method of claim 4, wherein the pre-determined period comprises at least one pre-determined time interval, and wherein determining (S220) the hydrogen production of the electrolyzer and the ancillary service offer in the pre-determined period further comprises:
   for each pre-determined time interval, performing an adjustment process comprising:

   - if there is at least one unavailable ancillary service different from the at least one available ancillary service in the plurality of predefined ancillary services, determining (S510) a potential ancillary service profit for each of the at least one unavailable ancillary service based on corresponding ancillary service price forecast;
   - in response to the respective one potential ancillary service profit of the at least one unavailable ancillary service being larger than a second threshold, identifying (S520) an adjustment for the hydrogen production of the electrolyzer to enable the provision of the unavailable ancillary service to the electrical grid under the technical operational constraints of the electrolyzer, wherein the second threshold is determined at least based on a cost incurred by adjusting the hydrogen production due to the provision of the unavailable ancillary service; and
   - in response to the respective one potential ancillary service profit for the at least one unavailable ancillary service being larger than a third threshold, adjusting (S530) the hydrogen production of the electrolyzer based on the identified adjustment and incorporating the unavailable ancillary service into the ancillary service offer, wherein the third threshold is determined at least based on a cost incurred by adjusting the hydrogen production of the electrolyzer based on the identified adjustment during the pre-determined period.

6. The method of claim 5, wherein the identifying an adjustment for the hydrogen production of the electrolyzer to enable the provision of the unavailable ancillary service to the electrical grid under the technical operational constraints of the electrolyzer comprises:
   identifying the adjustment for the hydrogen production of the electrolyzer under the technical operational constraints of the electrolyzer for the current interval and the subsequent intervals of the pre-determined period.

7. The method of claim 5, wherein the adjustment is identified as a minimized adjustment for the hydrogen production of the electrolyzer to just enable the provision of the unavailable ancillary service to the electrical grid under the technical operational constraints of the electrolyzer.

8. The method of claim 5, wherein the technical operational constraints comprise the ramp-up and the ramp-down rate of the electrolyzer, and wherein the adjustment is identified as a maximum change rate of the hydrogen production between the current interval and the next interval under the ramp-up and the ramp-down rate of the electrolyzer and an adjusting duration required by the ancillary service to be provided.

9. The method of claim 5, wherein determining (S220) the hydrogen production of the electrolyzer and the ancillary service offer in the pre-determined period further comprises:
   for each pre-determined time interval,

   - if no adjustment is identified for the current pre-determined time interval, the adjustment process proceeds to the next pre-determined time interval without any adjustment of the hydrogen production of the electrolyzer and the ancillary service offer; and
   - if adjustment is identified for the current pre-determined time interval, the adjustment process proceeds to the next pre-determined time interval with adjusted hydrogen production of the electrolyzer and the ancillary service offer.

10. A method of claim 5, wherein performing the adjustment process further comprises:

    - identifying all profitable pre-determined time interval from the plurality of pre-determined time intervals, wherein the profitable pre-determined time interval has a potential ancillary service profit for the at least one unavailable ancillary service being larger than a second threshold from a plurality of pre-determined time intervals; and
- initiating the adjustment process starting from the pre-determined time interval with the highest potential ancillary service profit.

11. A method of any one of claims 1-3, wherein determining (S220) the hydrogen production of the electrolyzer and the ancillary service offer in the pre-determined period comprises:
determining the hydrogen production of the electrolyzer and the ancillary service offer, by minimizing the hydrogen production cost and meanwhile maximizing the ancillary service profit under the technical operational constraints of the electrolyzer.

12. A method of any one of claims 1-3, further comprising:

- acquiring at least respective one real-time ancillary service price forecast in the pre-determined period for at least one real-time predefined ancillary services, grid operating conditions from the electrical grid, and the technical operational constraints of the electrolyzer; and
- determining a real-time hydrogen production of the electrolyzer and a real-time ancillary service offer which includes at least one ancillary service to be provided to the electrical grid, at least based on the real-time ancillary service price forecast from the electrical grid, and the grid operating conditions, and the technical operational constraints of the electrolyzer.

13. A electrolyzer plant connected to an electrical grid, comprising:

at least on electrolyzer; and
a plant controller configured to perform a method of any one of claims 1-12.

14. A computer-readable storage medium having computer-readable instructions stored thereon, when the computer-readable instructions are executed by a processor, the processor performs a method of any one of claims 1-12.

15. A computer program product comprising instructions which, when executed by a computer, cause the computer to perform a method of any one of claims 1-12.

110

100

101

H₂

Ancillary service

Fig. 1

200

| Acquiring an electricity price forecast in a pre-determined period, at least respective one ancillary service price forecast in the pre-determined period for at least one of the plurality of predefined ancillary services, and technical operational constraints of the electrolyzer | S210 |

| Determining a hydrogen production of the electrolyzer and an ancillary service offer in the pre-determined period, at least based on a hydrogen production cost in the pre-determined period, an ancillary service profit, and the technical operational constraints of the electrolyzer, wherein the ancillary service offer includes at least one ancillary service to be provided to the electrical grid | S220 |

Fig. 2

| | |
|---|---|
| Producing hydrogen by the electrolyzer according to the determined hydrogen production of the electrolyzer | S310 |
| In response to the electrical grid accepting at least one ancillary service in the ancillary service offer, providing the at least one ancillary service to the electrical grid by adjusting the hydrogen production | S320 |

Fig. 3

*400*

Determining the hydrogen production of the electrolyzer, by minimizing the hydrogen production cost under the technical operational constraints of the electrolyzer — S410

Selecting at least one available ancillary service from the plurality of predefined ancillary services based on the determined hydrogen production of the electrolyzer and the technical operational constraints of the electrolyzer — S420

For each available ancillary service of the at least one available ancillary service, in response to an ancillary service profit of the available ancillary service being higher than a first threshold, incorporating the available ancillary service into the ancillary service offer, wherein the ancillary service profit of the available ancillary service is determined at least by the available ancillary service and an ancillary service price forecast of the at least one ancillary service price forecast corresponding to the available ancillary service, and wherein the first threshold is determined at least based on a cost incurred by adjusting the hydrogen production due to the provision of the available ancillary service. — S430

Fig. 4

```
                                    ┌ 500
                                    │
┌─────────────────────────────────────────────────────────────────┐
│ If there is at least one unavailable ancillary service different  │      ┌ S510
│ from the at least one available ancillary service in the          │     ╱
│ plurality of predefined ancillary services, determining a         ├─────
│ potential ancillary service profit for each of the at least one   │
│ unavailable ancillary service based on corresponding ancillary    │
│ service price forecast                                            │
└─────────────────────────────────────────────────────────────────┘
                                    │
                                    ▼
┌─────────────────────────────────────────────────────────────────┐
│ In response to the respective one potential ancillary service     │
│ profit of the at least one unavailable ancillary service being    │
│ larger than a second threshold, identifying an adjustment for the  │
│ hydrogen production of the electrolyzer to enable the provision    │      ┌ S520
│ of the unavailable ancillary service to the electrical grid under  │     ╱
│ the technical operational constraints of the electrolyzer,         ├─────
│ wherein the second threshold is determined at least based on a     │
│ cost incurred by adjusting the hydrogen production due to the      │
│ provision of the unavailable ancillary service                    │
└─────────────────────────────────────────────────────────────────┘
                                    │
                                    ▼
┌─────────────────────────────────────────────────────────────────┐
│ In response to the respective one potential ancillary service     │
│ profit for the at least one unavailable ancillary service being    │
│ larger than a third threshold, adjusting the hydrogen production   │
│ of the electrolyzer based on the identified adjustment and         │      ┌ S530
│ incorporating the unavailable ancillary service into the          │     ╱
│ ancillary service offer, wherein the third threshold is           ├─────
│ determined at least based on a cost incurred by adjusting the      │
│ hydrogen production of the electrolyzer based on the identified    │
│ adjustment during the pre-determined period                       │
└─────────────────────────────────────────────────────────────────┘
```

Fig. 5

(a) Next-day electricity and A/S price forecasts

(b) Demand profile and A/S capability determined by sequential production cost and A/S capability analysis

(c) Optimized demand profile adjustment enabling high-priced A/S capability

Fig. 6

Preliminary day-ahead (24 hours) economic demand bids and A/S capability offers

N = 1

Evaluate potential profit of demand adjustment for hour N to enable or increase high-priced A/S capability

N=N+1

Potential profit meets threshold ?

No

Yes

Identify economic and feasible demand adjustments considering plant operational requirements and constraints

Potential profit still meets threshold ?

No

Yes

Adjust the demand profile and A/S capability

N=24?

No

Yes

Submit the optimized economic demand bids and A/S capability offers to system operator

Fig. 7

800

| Acquiring at least respective one real-time ancillary service price forecast in the pre-determined period for at least one real-time predefined ancillary services, grid operating conditions from the electrical grid, and the technical operational constraints of the electrolyzer | S810 |

| Determining a real-time hydrogen production of the electrolyzer and a real-time ancillary service offer which includes at least one ancillary service to be provided to the electrical grid, at least based on the real-time ancillary service price forecast from the electrical grid, and the grid operating conditions, and the technical operational constraints of the electrolyzer | S820 |

Fig. 8

900

PROCESSOR
902

MEMORY
904

906

INPUT
INTERFACE
910

DATA
STORE
908

OUTPUT
INTERFACE
912

Fig. 9

# EP 4 625 277 A1

Europäisches
Patentamt
European
Patent Office
Office européen
des brevets

## EUROPEAN SEARCH REPORT

**Application Number**

EP 24 16 9418

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/084467 A1 (VICKRESS DUSTIN [CA] ET AL) 14 March 2024 (2024-03-14) <br> * abstract; figures 2, 3, 4A, 4B * <br> * paragraphs [0003] - [0009] * <br> * paragraphs [0011] - [0023] * <br> * paragraphs [0032] - [0099] * <br> - - - - - | 1-15 | INV. <br> G06Q10/04 <br> G06Q50/00 <br> G06Q50/06 |
| X | EP 4 254 709 A1 (H2GS II AB [SE]) 4 October 2023 (2023-10-04) <br> * paragraphs [0010] - [0040] * <br> * paragraphs [0043] - [0062] * <br> - - - - - | 1-15 | |
| Y | CN 116 579 115 A (STATE GRID ENERGY RES INST CO LTD) 11 August 2023 (2023-08-11) <br> * abstract; claims 1-5 * <br> * paragraphs [0002] - [0043] * <br> - - - - - | 1-15 | |
| Y | US 2013/317959 A1 (JOOS NATHANIEL IAN [CA] ET AL) 28 November 2013 (2013-11-28) <br> * paragraphs [0037] - [0076] * <br> - - - - - | 1-15 | |
| | | | TECHNICAL FIELDS SEARCHED (IPC) <br><br> G06Q <br> H02J |

The present search report has been drawn up for all claims

| Place of search | Date of completion of the search | Examiner |
|---|---|---|
| Munich | 26 September 2024 | Mülthaler, Evelyn |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

  & : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 16 9418

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2024

| Patent document cited in search report | | Publication date | Patent family member(s) | | Publication date |
|---|---|---|---|---|---|
| US 2024084467 | A1 | 14-03-2024 | CN | 117661029 A | 08-03-2024 |
| | | | EP | 4345195 A2 | 03-04-2024 |
| | | | US | 2024084467 A1 | 14-03-2024 |
| EP 4254709 | A1 | 04-10-2023 | NONE | | |
| CN 116579115 | A | 11-08-2023 | NONE | | |
| US 2013317959 | A1 | 28-11-2013 | CA | 2874782 A1 | 05-12-2013 |
| | | | CA | 3101570 A1 | 05-12-2013 |
| | | | CA | 3197521 A1 | 05-12-2013 |
| | | | CN | 104704147 A | 10-06-2015 |
| | | | DK | 2855736 T3 | 06-05-2019 |
| | | | EP | 2855736 A1 | 08-04-2015 |
| | | | EP | 3613876 A1 | 26-02-2020 |
| | | | ES | 2727345 T3 | 15-10-2019 |
| | | | JP | 6591892 B2 | 16-10-2019 |
| | | | JP | 6860622 B2 | 14-04-2021 |
| | | | JP | 2015528851 A | 01-10-2015 |
| | | | JP | 2019198221 A | 14-11-2019 |
| | | | US | 2013317959 A1 | 28-11-2013 |
| | | | US | 2015167182 A1 | 18-06-2015 |
| | | | US | 2019249319 A1 | 15-08-2019 |
| | | | US | 2022119967 A1 | 21-04-2022 |
| | | | US | 2023407502 A1 | 21-12-2023 |
| | | | WO | 2013177700 A1 | 05-12-2013 |

EPO FORM P0459

For more details about this annex : see Official Journal of the European Patent Office, No. 12/82